# EUROPÄISCHE PATENTANMELDUNG

(11) **EP 0 684 469 A2**
(43) Veröffentlichungstag der Anmeldung: **29.11.1995**
(21) Anmeldenummer: 95107176.0
(22) Anmeldetag: 11.05.1995
(51) Int. Cl.: G01N 27/49

(54) **Messgerät zur Konzentrationsbestimmung von Alkoholen**

(30) Priorität: 24.05.1994 DE 4418035
(71) Anmelder: SIEMENS AKTIENGESELLSCHAFT, D-80333 München (DE)
(72) Erfinder: Luft, Günter, Dipl. Ing., D-91207 Lauf (DE); Starbeck, Gerhard, D-90411 Nürnberg (DE)

(57) **Zusammenfassung**

Ein Meßgerät zur Konzentrationsbestimmung niedermolekularer Alkohole in Wasser oder Säuren weist folgenden Aufbau auf:
- eine poröse Anode zur elektrochemischen Oxidation von Alkohol
- eine Kathode zur elektrochemischen Reduktion von Sauerstoff
- eine zwischen Anode und Kathode angeordnete ionenleitende Membran und
- eine auf der von der ionenleitenden Membran abgewandten Seite der Anode angeordnete diffusionsbegrenzende Membran.

## Beschreibung

Die Erfindung betrifft ein Meßgerät zur Konzentrationsbestimmung niedermolekularer Alkohole in Wasser oder Säuren.

Für die elektrochemische Energieerzeugung in Brennstoffzellen stellt Methanol, ein niedermolekularer Alkohol, einen attraktiven Brennstoff dar. In mit Methanol betriebenen Brennstoffzellen kann eine alkalische Elektrolytflüssigkeit verwendet werden, insbesondere Kalilauge. Wegen des bei der Oxidation von Methanol entstehenden Kohlendioxids werden jedoch Brennstoffzellen mit saurem Elektrolyt, wie Schwefelsäure, bevorzugt. Ein derartiger Elektrolyt ist aber insbesondere bei höheren Temperaturen sehr aggressiv, so daß zum Aufbau entsprechender Batterien nur relativ teuere Werkstoffe eingesetzt werden können.

Seit einiger Zeit werden sogenannte PEM-Brennstoffzeller entwickelt, d.h. Brennstoffzellen mit einer Polymerelektrolytmembran (PEM). Dieser Zelltyp eignet sich auch zum Aufbau von Brennstoffzellen zur direkten Umsetzung von Methanol, sogenannte Direkt-Methanol-Brennstoffzellen. In diesem Fall muß der Brennstoff Methanol nicht mehr in einem aggressiven Elektrolyt, wie Schwefelsäure, vorliegen, vielmehr können auch wäßrige Methanollösungen zum Einsatz gelangen.

In mit Methanol betriebenen PEM-Brennstoffzellen muß die Methanolkonzentration an der Anode - wegen der Methanolverluste durch Diffusion durch die Polymerelektrolytmembran - möglichst gut an die aktuelle elektrische Leistung der Brennstoffbatterie angepaßt werden. Dazu ist eine Konzentrationsmeßzelle erforderlich, d.h. ein Meßgerät zur Konzentrationsbestimmung des Methanols, das als Kontroll- und Überwachungseinheit im Brennstoffkreislauf dient.

Übliche Meßverfahren zur Konzentrationsbestimmung von Alkoholen sind im Konzentrationsbereich von 0 bis 2 mol/l - wegen der sich nur wenig ändernden physikalischen Eigenschaften - relativ ungenau oder sehr aufwendig. Elektrochemische Meßzellen zur Konzentrationsbestimmung von Alkoholen setzen saure oder basische Elektrolyte voraus, was ebenfalls nachteilig ist (siehe dazu: G. Ciprios, "Proceedings of the 20th Annual Power Sources Conference", 24. bis 26. Mai 1966; "Energy Conversion", Vol. 12 (1972), Seiten 65 bis 68).

Aufgabe der Erfindung ist es, ein Meßgerät anzugeben, das in einfacher Weise die Bestimmung der Konzentration niedermolekularer Alkohole auch in wäßrigen Losungen gestattet.

Dies wird erfindungsgemäß durch ein Meßgerät erreicht, das durch folgende Merkmale gekennzeichnet ist:
- eine poröse Anode zur elektrochemischen Oxidation von Alkohol
- eine Kathode zur elektrochemischen Reduktion von Sauerstoff
- eine zwischen Anode und Kathode angeordnete ionenleitende Membran und
- eine auf der von der ionenleitenden Membran abgewandten Seite der Anode angeordnete diffusionsbegrenzende Membran.

Das Meßgerät nach der Erfindung, das sowohl in Wasser als auch in sauren Elektrolytflüssigkeiten betrieben werden kann, stellt quasi eine "Direkt-Alkohol-Brennstoffzelle" mit einem Polymerelektrolyt dar, vor deren Anode, d.h. der alkoholverzehrenden Elektrode, eine Membran angeordnet ist, die den Antransport des Alkohols begrenzt. Die Anode dieser Brennstoffzelle weist einen Katalysator zur elektrochemischen Oxidation des Alkohols auf, die Kathode einen Katalysator zur elektrochemischen Reduktion von Sauerstoff. Die Kathode wird dabei vorzugsweise so ausgestaltet, daß Luftsauerstoff umgesetzt wird, d.h. daß das Meßgerät mit Luft betrieben werden kann.

Die Anode ist eine poröse Elektrode, damit das bei der Oxidation des Alkohols gebildete Kohlendioxid entweichen kann.

Mit dem Meßgerät nach der Erfindung wird die Konzentration niedermolekularer Alkohole bestimmt. Derartige Alkohole sind insbesondere Methanol (CH₃OH), Ethanol (C₂H₅OH) und Propanole (C₃H₇OH). Vorzugsweise wird dieses Meßgerät zur Konzentrationsbestimmung von Methanol im Elektrolyt von Direkt-Methanol-Brennstoffzellen verwendet. Das Meßgerät weist im übrigen einen kompakten Aufbau auf, so daß eine zusätzliche Befeuchtung der Polymerelektrolytmembran nicht erforderlich ist.

Die Anode besteht vorteilhaft aus einem porösen Trägermaterial, das beidseitig mit einem Katalysator zur Oxidation von Alkohol versehen ist. Das Tragermaterial, das als gasabführende Schicht dient, ist vorzugsweise ein Kohlepapier oder ein Gewebe aus Kohle. Die Anode enthält vorzugsweise einen Platin/Ruthenium-Katalysator (Pt/Ru), die Kathode vorzugsweise einen Platinkatalysator (Pt). Als poröses Trägermaterial kann beispielsweise aber auch ein Platinnetz dienen.

Die diffusionsbegrenzende Membran ist vorteilhaft eine Kationenaustauschermembran, vorzugsweise eine Membran auf der Basis von Poly(perfluoralkylen)-sulfonsäure; es kann beispielsweise aber auch eine Membran aus Polytetrafluorethylen verwendet werden. Die ionenleitende Membran ist vorteilhaft eine Ionenaustauschermembran, beispielsweise eine Membran auf der Basis von Poly(perfluoralkylen)-sulfonsäure.

Anhand eines Ausführungsbeispiels soll die Erfindung noch näher erläutert werden.

Das verwendete Meßgerät weist eine Anode in Form eines Kohlepapiers auf, das beidseitig mit einem Pt/Ru-Katalysator belegt ist; die Katalysatorbelegung beträgt ca. 10 mg/cm². Die Kathode besteht aus Kohlepapier, das mit einem Pt-Katalysator versehen ist (Katalysatorbelegung: ca. 4 mg/cm²). Die aktive Zellfläche beträgt 2 cm². Als ionenleitende Membran dient eine handelsübliche Ionenaustauschermembran aus Nafion mit einer Dicke von ca. 120 µm, als diffusionsbegrenzende Membran eine entsprechende Membran mit einer Dicke von ca. 170 µm.

Dieses Meßgerät wird zur Konzentrationsbestimmung von Methanol im Elektrolyt einer Direkt-Methanol-Brennstoffzellenbatterie (DMFC = Direct Methanol Fuel Cell) verwendet. Dazu wird das Meßgerät in die Brennstoffleitung eingebaut, durch die eine wäßrige Methanollösung von einem Vorratsbehälter zur Batterie geleitet wird. Das Meßgerät liefert ein von der Methanolkonzentration abhängiges Meßsignal. Im einfachsten Fall wird dazu das Meßgerät mit einem konstanten Widerstand belastet und die Zellspannung als Meßsignal verwendet. Als Meßsignal kann aber auch der Zellstrom bei einer konstanten Zellspannung gemessen werden.

Das Meßgerät wird beispielsweise mit einem Widerstand von 1Ω belastet und die Spannung an diesem Widerstand als Meßsignal verwendet. Dabei ergibt sich eine im wesentlichen lineare Abhängigkeit des Stromabfalls (am Lastwiderstand) von der Methanolkonzentration im Bereich etwa bis zu 1 mol/l. Durch Variation der Dicke der diffusionsbegrenzenden Membran kann der Meßbereich erweitert werden. Außerdem zeigt sich, daß das Meßgerät auf Änderungen der Methanolkonzentration gut anspricht.

## Patentansprüche

1. Meßgerät zur Konzentrationsbestimmung niedermolekularer Alkohole in Wasser oder Säuren, **gekennzeichnet** durch:
- eine poröse Anode zur elektrochemischen Oxidation von Alkohol
- eine Kathode zur elektrochemischen Reduktion von Sauerstoff
- eine zwischen Anode und Kathode angeordnete ionenleitende Membran und
- eine auf der von der ionenleitenden Membran abgewandten Seite der Anode angeordnete diffusionsbegrenzende Membran.

2. Meßgerät nach Anspruch 1, **dadurch gekennzeichnet,** daß die Anode aus einem porösen Trägermaterial besteht, das beidseitig mit einem Katalysator zur Oxidation von Alkohol versehen ist.

3. Meßgerät nach Anspruch 1 oder 2, **dadurch gekennzeichnet,** daß die Anode einen Platin/Ruthenium-Katalysator enthält.

4. Meßgerät nach einem der Ansprüche 1 bis 3, **dadurch gekennzeichnet,** daß die Kathode einen Platinkatalysator enthält.

5. Meßgerät nach einem oder mehreren der Ansprühe 1 bis 4, **dadurch gekennzeichnet,** daß die diffusionsbegrenzende Membran eine Kationenaustauschermembran ist.

6. Meßgerät nach Anspruch 5, **dadurch gekennzeichnet,** daß die Kationenaustauschermembran eine Membran auf der Basis von Poly(perfluoralkylen)-sulfonsäure ist.

7. Meßgerät nach einem oder mehreren der Ansprüche 1 bis 6, **dadurch gekennzeichnet,** daß die ionenleitende Membran eine Ionenaustauschermembran ist.

8. Verwendung des Meßgerätes nach einem oder mehreren der Ansprüche 1 bis 7 zur Konzentrationsbestimmung von Methanol im Elektrolyt von Direkt-Methanol-Brennstoffzellen.
